# EUROPEAN PATENT APPLICATION

(11) **EP 2 009 040 A1**
(43) Date of publication of application: **31.12.2008**
(21) Application number: 07713662.0
(22) Date of filing: 15.01.2007
(51) Int. Cl.: C08G 63/78, C08G 63/08, C08J 3/20, C08L 101/16

(54) **PRODUCTION APPARATUS, AND PRODUCTION PROCESS, FOR POLYLACTIC ACID**

(30) Priority: 23.01.2006 JP 2006013509; 13.09.2006 JP 2006247997
(71) Applicant: Teijin Limited, Osaka-shi, Osaka 541-0054 (JP)
(72) Inventor: KURIHARA, Hideshi, Yamaguchi 740-0014 (JP); KATSUDA, Takeshi, Yamaguchi 745-0813 (JP); TOYOHARA, Kiyotsuna, Yamaguchi 740-0014 (JP); NONOKAWA, Ryuji, Yamaguchi 740-0014 (JP); SUZUKI, Hirotaka, Yamaguchi 740-0014 (JP); OHASHI, Kenji, Yamaguchi 740-0014 (JP)
(74) Representative: Hallybone, Huw George
(86) International application number: PCT/JP2007/050858
(87) International publication number: WO 2007/083780

(57) **Abstract**

A manufacturing apparatus of polylactic acid having at least an inlet and an outlet of a substance to be reacted and an exhaust port provided in a horizontal reaction vessel not having continuous rotating shafts in a direction of center line of a rotating shaft of a stirring blade provided in the reaction vessel and a manufacture method. By removing low molecular weight substance in the polylactic acid, high-quality polylactic acid can be stably manufactured.

## Description

### TECHNICAL FIELD

The present invention relates to a manufacturing apparatus of polylactic acid and a manufacturing method of polylactic acid.

### BACKGROUND ART

In recent years, for the purpose of protecting the global environment, biodegradable polymers which are degraded under a natural environment are watched and studied in the whole world. As the biodegradable polymers, there are known polyhydroxybutyrate, polycaptolactone, aliphatic polyesters, and polylactic acids.

Of these, with respect to the polylactic acid, lactic acid or a lactide which is a starting material thereof can be manufactured from natural products, and its utilization is being investigated as a general-purpose polymer but not as a biodegradable polymer.

Though the polylactic acid is high in transparency and tough, it is easily hydrolyzed in the presence of water and after disposal, is degraded without polluting the environment, and therefore, it is a resin with a low environmental load.

This polylactic acid is obtained by direct dehydration condensation of lactic acid, or by preparation of a cyclic lactide (dimer) from lactic acid and then performing ring opening polymerization. The thus obtained polylactic acid just after the preparation contains impurities such as degradation products of the lactide or polymer. These impurities become a factor of the generation of a foreign substance at the molding and besides, reduce physical properties (for example, glass transition point temperature and melt viscosity), resulting in remarkable deterioration in fabrication properties and heat stability.

As an apparatus for removing impurities from polylactic acid, there is a known apparatus composed of a horizontal reactor in which at least one rotating shaft having stirring blades is arranged in parallel and an inlet and an outlet of a substance to be reacted and a degassing port provided in the subject reactor (see, for example, Patent Document 1).

Also, there is known a technology for removing an unreacted lactide or the like by an operation under reduced pressure using a Luwa thin film evaporator or a horizontal single screw or twin screw reactor for high viscosity use (see, for example, Patent Document 2).

However, in these reactors, a stable operation over a long period of time is impossible, and foreign substances are liable to be generated.

Also, in the case of using a kneading extruder as the apparatus described in Patent Document 1, the quality of a formed polymer is lowered with a lapse of the operation time, and problems such as deposition of the residue to the screw or plugging of the apparatus by the residue are caused. Accordingly, as a countermeasure thereto, there is proposed a method of continuously feeding a substance with high melt viscosity into a kneading extruder (see, for example, Patent Document 3).

However, even a combination of the foregoing monomer removal method with this method is not preferable because the production efficiency is lowered.

Furthermore, as a manufacture method of a polycondensation based polymer which becomes very highly viscous in a polymerization stage and a method of removing a volatile component from a molten fluid which has becomes very highly viscous, there is proposed a center shaft-free body of revolution for liquid stirring and mixing use (see, for example, Patent Document 4) . However, for this method, it is expressly written that a succeeding polycondensation reactor is necessary, and this method cannot be applied to the removal of a monomer from polylactic acid.

Also, there is proposed a horizontal reaction vessel which does not require strong stirring, is able to minimize the generation of a foreign substance during the reaction and is able to remarkably improve a reaction rate or reaction efficiency and a quality of a polycondensation based polyester to be manufactured (see, for example, Patent Document 5). However, in the field of stably manufacturing high-quality polylactic acid with a low content of low molecular weight substances (for example, lactide) by polymerizing polylactic acid from lactic acid and removing the low molecular weight substances in the polylactic acid, it is the present situation that sufficient results are not obtainable yet.

Also, though the polylactic acid is excellent in heat resistance and well balanced between hue and mechanical strength, it compares unfavorably with petrochemical based polyesters represented by polyethylene terephthalate and polybutylene terephthalate. In order to resolve such present situation, stereo complex polylactic acid resulting from crystallization of a mixture of poly-L-lactic acid and poly-D-lactic acid is investigated, too. The "stereo complex polylactic acid" as referred to herein is polylactic acid containing a stereo crystal and has a melting point of from 30 °C to 50 °C higher than that of general polylactic acid made of a homo crystal.

However, it is not the case that the stereo crystal always appears, and in particular, the homo crystal rather often appears in a high molecular weight region. Also, when the distribution of poly-L-lactic acid and poly-D-lactic acid is heterogeneous, there may be the case where the homo crystal coexists or a degree of crystallization is lowered. For that reason, Patent Document 6 discloses a method of kneading poly-L-lactic acid and poly-D-lactic acid at a temperature of their melting points or higher by using a single screw extruder, a twin screw extruder or a kneader and then performing solid phase polymerization for realizing a high molecular weight.

However, in a sort of the foregoing extruders, in long-term kneading for applying a strong shear to polylactic acid in a molten state, a lowering in molecular weight is caused. Inversely, for the purpose of avoiding this, in the case where a residence time is set up short, since heterogeneity of the kneading remains as a problem, a solid state polymerization process is needed to be added. Accordingly, such is problematic from the viewpoint of cost reduction.

As described above, there has not been known a manufacturing method of stereo complex polylactic acid for efficiently forming a stereo complex crystal without causing a lowering in molecular weight.
[Patent Document 1] JP-A-9-104745
[Patent Document 2] JP-A-8-311175
[Patent Document 3] JP-A-2003-252975
[Patent Document 4] JP-A-10-218998
[Patent Document 5] JP-A-11-217443
[Patent Document 6] JP-A-2003-238672

### DISCLOSURE OF THE INVENTION

An object of the invention is to provide an apparatus capable of stably manufacturing high-quality polylactic acid by removing low molecular weight substances in polylactic acid and a manufacturing method and can be achieved by a manufacturing apparatus of polylactic acid having at least an inlet and an outlet of a substance to be reacted and an exhaust port and provided with the following elements (A) to (E):
(A) a cylindrical reactor having an inlet and an outlet thereof in the vicinity of both ends thereof, respectively;
(B) rotatory end discs provided opposing to each other in the both ends in the inside of the reactor;
(C) a disc arranged between the end discs and having an opening in a central part thereof;
(D) a helically provided stirring blade installed between the end disc and the opening disc and between the opening discs and provided in close contact with or in the vicinity of an internal circumferential wall surface of the reactor along a longitudinal direction of a shaftless cage type reactor; and
(E) a free surface area forming member provided on an extension of the stirring blade towards the inside of the reactor.

Another object of the invention is to provide a method of manufacturing a stereo complex polylactic acid by uniformly mixing poly-L-lactic acid and poly-D-lactic acid without causing a lowering in molecular weight and can be achieved by a manufacturing method of polylactic acid by using a shaftless cage type reactor provided with the following elements (a) to (e):
(a) a cylindrical reactor having an inlet and an outlet thereof in the vicinity of both ends thereof, respectively;
(b) rotatory end discs provided opposing to each other in the both ends in the inside of the reactor;
(c) a disc arranged between the end discs and having an opening in a central part thereof;
(d) a stirring blade installed between the end disc and the opening disc and between the opening discs and provided in close contact with or in the vicinity of an internal circumferential wall surface of the reactor along a longitudinal direction of a shaftless cage type reactor; and
(e) a free surface area forming member provided on an extension of the stirring blade towards the inside of the reactor.

### BRIEF DESCRIPTION OF THE DRAWINGS

Fig. 1 is a side sectional view to illustrate a horizontal reactor for carrying out the invention.
Fig. 2 shows a front view of an opening disc (13).

### BEST MODES FOR CARRYING OUT THE INVENTION

A measure for achieving the first object of the invention is a manufacturing apparatus of polylactic acid including a horizontal reactor which is provided with (A) a cylindrical reaction vessel having an inlet and an outlet of a reaction liquid in both ends thereof or in the vicinity of the both ends, respectively; (B) rotatable end discs provided opposing to each other in the both ends in the inside of the reaction vessel; (C) a disc arranged between the end discs and having an opening in a central part thereof; (D) a helically provided stirring blade installed between the end disc and the opening disc and between the opening discs and provided in close contact with or in the vicinity of an internal circumferential wall surface of the reactor along a longitudinal direction of a shaftless cage type reactor; and (E) a free surface forming member provided in plural lines or in a single line along a dropping edge of the stirring blade from which the reaction liquid starts to drop from the stirring blade and in substantial parallel to the dropping edge at a position capable of coming into contact with at least a part of the dropping reaction liquid.

Then, a manufacturing method of polylactic acid for removing low molecular weight substances from polylactic acid by using the foregoing manufacturing apparatus while using, as a substance to be reacted, polylactic acid resulting from polymerization of lactic acid is provided.

A measure for achieving the second object of the invention can be achieved by a manufacturing method of polylactic acid by using a shaftless cage type reactor provided with the following elements (a) to (e):
(a) a cylindrical reactor having an inlet and an outlet thereof in the vicinity of both ends thereof, respectively;
(b) rotatory end discs provided opposing to each other in the both ends in the inside of the reactor;
(c) a disc arranged between the end discs and having an opening in a central part thereof;
(d) a stirring blade installed between the end disc and the opening disc and between the opening discs and provided in close contact with or in the vicinity of an internal circumferential wall surface of the reactor along a longitudinal direction of a shaftless cage type reactor; and
(e) a free surface area forming member provided on an extension of the stirring blade towards the inside of the reactor.

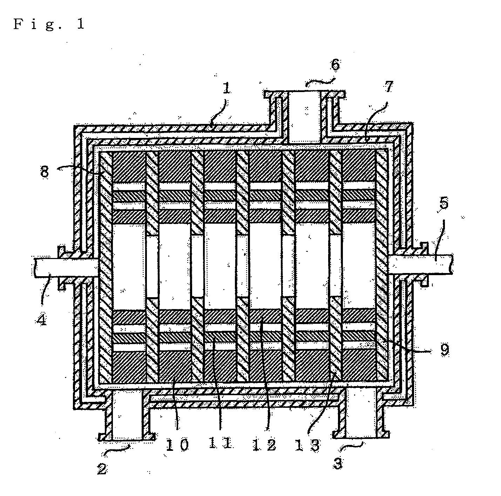

The measure for achieving the first object of the invention is hereunder described in detail with reference to the drawings. Fig. 1 is a side sectional view to illustrate a horizontal reactor for carrying out the invention.

In the subject drawing, 1 is a horizontal type reaction vessel main body; and 2 is an inlet of a substance to be reacted, and 3 is an outlet of a substance to be reacted, which are provided in both ends of the reaction vessel 1 or in the vicinity of the both ends. 4 and 5 are a shaft provided in the both ends of the reaction vessel 1. 6 is an exhaust port which is opened in an upper portion of an outer shell of the reaction vessel and if desired, also serves as a suction port for keeping the inside the reaction vessel under a reduced pressure. 7 is an internal circumferential wall surface of the reaction vessel 1, and if desired, a projection can also be provided on the internal circumferential wall surface 7 while taking into consideration such that it does not interfere with a stirring blade 10.

Fig. 1, 8 and 9 are each an end disc which is fixed to the shafts 4 and 5, respectively; and by driving the shafts 4 and 5 by a power of a driving device (not illustrated), the end discs 8 and 9 can be rotated. 10 is a helically provided stirring blade in close contact with or in the vicinity of the internal circumferential wall surface 7 in a longitudinal direction thereof; and 11 and 12 are each a free surface forming member arranged in two lines in parallel to a dropping edge of a reaction product of the stirring blade 10.

Here, with respect to the terms "helically provided stirring blade" as referred to herein, the stirring blade sandwiched by opening discs 13 may be arranged at an arbitrary angle without being arranged in parallel to a shaft direction of the shafts 4 and 5; the stirring blade per se may be arranged in parallel to a shaft direction of the shafts 4 and 5, with an arrangement position being deviated by an arbitrary angle from a stirring blade in an adjacent region partitioned by the opening disc 13 while keeping the same distance from the rotation center, thereby forming a substantially helical shape as a whole of the inside of the reactor; and the foregoing may be combined. By employing such arrangement, it is possible to reveal a send effect (or return effect) of polylactic acid. A degree of this send effect (or return effect) can be controlled depending upon the desire by not only the helical shape itself but also a rate of revolution of the driving device and the temperature within the reactor.

In the embodiment of Fig. 1, round bars having a different diameter are illustrated. 13 is an opening disc; and the opening discs 13 are connected and fixed to each other at prescribed intervals in a longitudinal direction by the round bars 11 and 12 which are the free surface forming member as well as the stirring blade 10, have an opening in a central part thereof and play a role for partitioning the inside of the reaction vessel 1 into plural chambers. 14 is an injection port of an inert gas or steam; and 15 is an addition port of a liquid which is vaporized in the reaction vessel. 14 and 15 may be provided in an outer shell of the reaction vessel as the need arises; and furthermore, 14 may be in an upper part of the outer shell of the reaction vessel.

Incidentally, the foregoing round bars 11 and 12 which are the free surface forming member are provided in plural lines or in a single line along a dropping edge of the stirring blade from which the reaction liquid starts to drop from the stirring blade 10 and in substantial parallel to the dropping edge at a position capable of coming into contact with at least a part of the dropping reaction liquid.

Here, the stirring blade 10 is inclined such that during a time when the stirring blade 10 rotates and rises in a gas phase in the reaction vessel 1, its edge in a side in close contact with or in the vicinity of the internal circumferential wall surface 7 is faced downwardly, whereas its dropping edge in the opposite side thereto is faced upwardly. Then, it is preferable that the stirring blade 10 is inclined such that during a time when it descends in a gas phase in the reaction vessel 1, its edge in a side in close contact with or in the vicinity of the internal circumferential wall surface 7 is faced upwardly, whereas its dropping edge in the opposite side thereto is faced downwardly. In this way, the stirring blade 10 is able to scrape up the reaction liquid along the internal circumferential wall surface 7 during a time when it rises in a gas phase in the reaction vessel, whereas it is able to flow down the reaction liquid in a thin film state along the stirring blade 10 during a time when it descends. Furthermore, if desired, it is possible to bring the reaction liquid which has flown down from the stirring blade 10 into contact with the free surface forming member. Incidentally, in the case of bringing the stirring blade 10 into close contact with the internal circumferential wall surface 7, a tail (not illustrate) can be auxiliarily provided, too. By this tail, it is also possible to promote a renewal of the reaction liquid deposited on the internal circumferential wall surface 7.

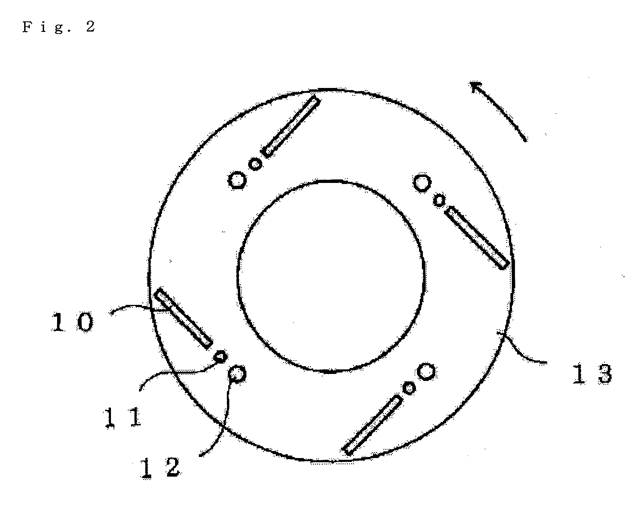

Fig. 2 shows a front view of the opening disc 13. In the subject drawing, 10 is a stirring blade in a plate form as inclined in a reverse direction to the rotation direction, four blades of which are arranged while being deviated by every 90° in a circumferential direction of the reaction vessel 1. The number of this stirring blade 10 to be arranged can be increased or decreased from the four blades as the need arises, and on that occasion, it is preferable that the stirring blades are uniformly arranged in a circumferential direction. The round bars 11 and 12 can be respectively arranged in two lines as a free surface forming member on an extension of each stirring blade 10 in substantial parallel along the dropping edge of the stirring blade 10. On that occasion, it is preferable that a diameter of the round bar 12 arranged at a position the closest to a rotation center of the stirring blade is larger than that of the round bar 11 arranged at a position far from the rotation center.

Incidentally, in the case where the diameters of the round bars 11 and 12 are equal to each other or the diameter of the round bar 11 is reversely larger than that of the round bar 12, it is difficult to form a liquid flow of the reaction product as a multilayered film. This is because in such case, the most part of the reaction liquid often drips and drops in a united form from a gap between the stirring blade 10 and the round bar 11 so that it becomes difficult to sufficiently achieve the formation of a liquid flow having a large free surface such as a desired stable multilayered film. Incidentally, instead of the round bar, a rod-like body having a polygonal, egg-shaped or oval lateral cross section can be used; and a plate-like body such as a planar plate and a curved plate can be used. Furthermore, the plate-like body can be formed in a lattice state or net state or can be formed into a perforated plate. In such case, needless to say, a condition under which when the reaction liquid flows down, a large free surface is formed is preferable. Accordingly, needless to say, a free surface forming member taking into consideration such that when the fluid flows down, the free surface is not decreased upon being united is used.

Here, conditions such as the number, shape and size of the stirring blade and the free surface forming member, or a gap to be arranged vary depending upon the manufacturing condition or the like. However, under these conditions, it is important that the dropping reaction liquid comes into contact with the free surface forming member and flows down while forming a liquid flow having a large free surface area such as a multilayered film. Also, needless to say, in the case where a melt viscosity of the reaction liquid changes from the inlet of the reaction vessel towards the outlet, conditions such as the number, shape and size of the stirring blade and the free surface forming member, or a gap to be arranged can be changed corresponding to the change in viscosity.

The present horizontal reaction vessel has a heating measure (not illustrated) for heating at a desired temperature, and the outer shell of the reactor can be directly heated by an electric heating source. Also, there can be properly employed a method in which as illustrated in Fig. 1, the outer shell of the manufacturing apparatus is of a double-walled jacket structure and a suitable heading medium such as a heating medium liquid or heating medium vapor of, for example, Dowtherm is made present in the inside of the jacket, thereby achieving heating; and a method in which a heat transfer surface is arranged in a reaction chamber. With respect to the foregoing heating, every reaction chamber partitioned by the opening disc and/or every division resulting from further dividing the reaction chamber may be independently heated, or two or more reaction chambers may be heated as a unit. Furthermore, a circulation measure having a heat exchanger provided in the inside of the horizontal reaction vessel of the invention or separately provided can also be provided as the need arises. Incidentally, a reaction pressure is not particularly limited, and the reaction can be carried out under a reduced pressure or atmospheric pressure or an elevated pressure more than the atmospheric pressure.

As the "polylactic acid" as referred to in the invention, there can be enumerated one in which a polymer thereof is mainly composed of L-lactic acid; one in which a polymer thereof is mainly composed of D-lactic acid; one in which a polymer thereof is mainly composed of L-lactic acid and D-lactic acid; and a mixture of a polymer mainly composed of L-lactic acid and a polymer mainly composed of D-lactic acid. The term "mainly" as referred to herein means the occupation of 60 % by mole or more of the constitutional components, and other components may be copolymerized or blended.

Examples of components which may be copolymerized or blended include dicarboxylic acids, polyhydric alcohols, hydroxycarboxylic acids, and lactones, each of which contains two or more functional groups capable of forming an ester linkage; and various polyesters, various polyethers, and various polycarbonates composed of these various constitutional components. However, it should not be construed that the invention is limited thereto.

Examples of the dicarboxylic acid include succinic acid, adipic acid, azelaic acid, sebacic acid, terephthalic acid, and isophthalic acid. Examples of the polyhydric alcohol include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol; and aromatic polyhydric alcohols such as one resulting from adding ethylene oxide to bisphenol. Examples of the hydroxycarboxylic acid include glycolic acid and hydroxybutylcarboxylic acid. Examples of the lactone include glycolide, ε-caprolactone glycolide, ε-caprolactone, β-propiolactone, δ-butyrolactone, β-butyrolactone, γ-butyrolactone, pivalolactone, and δ-valerolactone.

In the polylactic acid of the invention, its terminal group may be sealed by various agents. Examples of such a terminal sealing agent include an acetyl group, an ester group, an ether group, an amide group, and a urethane group.

Examples of a catalyst which can be used for the polymerization include tin compounds, titanium based compounds, zinc compounds, aluminum compounds, zirconium compounds, and germanium compounds. These are used as a metal or a derivative thereof. Of these, the derivative is preferably a metallic organic compound, a carbonate, an oxide, or a halide. Specific examples thereof include tin 2-ethyl hexnoate, tetraisopropyl titanate, aluminum isopropoxide, antimony trioxide, zirconium isopropoxide, and germanium oxide. However, it should not be construed that the invention is limited thereto.

Also, talc, clay, titanium oxide, calcium carbonate, or the like may be utterly added as a nucleating agent or an additive.

Also, a phosphorus based compound can be used as a stabilizer. Above all, it is preferable that the phosphorus based compound is selected from carbomethoxymethenephosphonic acid, carboethoxymethanephophonic acid, carbopropoxymethanephosphonic acid, carbobutoxymethanephosphonic acid, carbomethoxy-phosphono-phenylacetic acid, carboethoxy-phosphono-phenylacetic acid, carbopropoxy-phosphono-phenylacetic acid, carbobutoxy-phosphono-phenylacetic acid, and dialkyl esters resulting from condensation of such a compound group and a linear alcohol having from 1 to 10 carbon atoms.

A weight average molecular weight of the polylactic acid of the invention is preferably 30, 000 or more and not more than 600,000, and more preferably 50,000 or more and not more than 500,000. The "weight average molecular weight" as referred to herein is a weight average molecular weight as reduced into standard polystyrene measured by gel permeation chromatography (GPC) using chloroform as an eluent.

The polylactic acid of the invention includes stereo complex polylactic acid. The "stereo complex polylactic acid" as referred to herein is one resulting from crystallization of a mixture of poly-L-lactic acid and poly-D-lactic acid as described previously and having a proportion of a melting peak of 195 °C or higher of melting peaks in the temperature rising process of 80 % or more, preferably 90 % or more, and more preferably 95 % or more and a melting point in the range of from 195 to 240 °C, and more preferably in the range of from 200 to 230 °C in the measurement by a differential scanning colorimeter (DSC). A melting enthalpy is 20 J/g or more, and preferably 30 J/g or more.

Concretely, it is preferable that in the measurement by a differential scanning colorimeter (DSC), a proportion of a melting peak of 195 °C or higher of melting peaks in the temperature rising process is 90 % or more, a melting point is in the range of from 195 to 250 °C, and a melting enthalpy is 20 J/g or more.

The polylactic acid of the invention can be manufactured by a known arbitrary polymerization method of polylactic acid. For example, the polylactic acid can be manufactured by ring opening of a lactide, dehydration condensation of lactic acid, or a combined method thereof with solid phase polymerization.

Next, a measure for achieving the second object of the invention is described in detail.

According to the manufacturing method of the invention, poly-L-lactic acid and poly-D-lactic acid can be efficiently uniformly mixed without hindering the molecular weight of the polylactic acid.

Poly-L-lactic acid and poly-D-lactic acid are thrown from the inlet of the reactor and mixed while heating and melting.

Examples of the throwing of poly-L-lactic acid and poly-D-lactic acid include a method in which the both are fed in the same feed amounts in independent metering feeders from each other; a method in which a chip of poly-L-lactic acid and a chip of poly-D-lactic acid as mixed in advance in a ratio of L/D of 1/1 are passed through a static mixer; and a method in which a single screw or twin screw extruder and an inlet of a shaftless cage type reactor are directly connected to each other and the both are fed for a short time of, for example, shorter than 5 minutes in terms of a residence time. Taking into consideration moisture absorption or incorporation of oxygen, it is preferable that the both are fed by directly connecting the single screw or twin screw extruder and the inlet to each other. Poly-L-lactic acid and poly-D-lactic acid which have been thrown from the inlet are molten and uniformly mixed while moving within the reactor. It is preferable that a gear pump is provided in the outlet and that the mixture is discharged while keeping a balance with the feed amount of the extruder directly connected to the inlet. In the case where the balance in feed and discharge of the mixture of poly-L-lactic acid and poly-D-lactic acid is not kept, a distribution is generated in the mean residence time of the discharged mixture of poly-L-lactic acid and poly-D-lactic acid, and a possibility that the uniformity of mixing changes with time becomes high. The stirring blade and the free surface area forming member are bridged over the both ends of the apparatus, and a disc having an opening is arranged in the midway thereof.

The mixture of poly-L-lactic acid and poly-D-lactic acid as molten in the reactor is stirred by the stirring blade and can move in a circumferential direction along the inner wall of the reactor. Furthermore, the free surface area forming member accompanied in the stirring blade is able to scrape up the mixture of poly-L-lactic acid and poly-D-lactic acid remaining on the inner wall of the reactor, thereby forming a thin film in a waterfall-like state during circling in the reactor. Such movement of the mixture of poly-L-lactic acid and poly-D-lactic acid contributes to uniform mixing. The opening disc positioned in the midway of the both ends of the reactor plays a role as a weir and realizes insurance of the residence time, an aspect of which has been considered impossible in an extruder. Though the number of the opening disc or the stirring blade is not particularly limited, the number of the opening disc is 1 or more and less than 10, and preferably 1 or more and less than 8; and the number of the stirring blade is 4 or more and less than 32, and preferably 8 or more and less than 16. With respect to the shape of the stirring blade, a planar plate, a round bar or a net-like plate which is substantially parallel to the longitudinal direction of the reactor or the like can be used. However, as described previously, for the purpose of revealing a send effect (or a return effect) of the mixture of poly-L-lactic acid and poly-D-lactic acid, the stirring blade can also be provided in a helical form. Also, with respect to the opening disc, a method in which its gap and opening area are successively changed in the longitudinal direction of the reactor can also be enumerated as a preferable mode.

The mixing of poly-L-lactic acid and poly-D-lactic acid is carried out by an operation under reduced pressure or under an inert gas stream in the heated shaftless cage type reactor. A mixing temperature of poly-L-lactic acid and poly-D-lactic acid is 180 °C or higher and lower than 260 °C, preferably 190 °C or higher and lower than 240 °C, and more preferably 200 °C or higher and lower than 230 °C. When the temperature in the reactor falls outside the foregoing numerical value range, the melt viscosity of poly-L-lactic acid and poly-D-lactic acid is high so that the mixing becomes non-uniform, or a lowering in molecular weight of poly-L-lactic acid and poly-D-lactic acid due to the high temperature becomes remarkable. As the inert gas which is used at mixing of poly-L-lactic acid and poly-D-lactic acid, a gas which does not participate in coloration or a lowering in molecular weight of polylactic acid and is sufficiently dried, such as, nitrogen, argon, and carbon dioxide, is especially preferable.

When the operation under reduced pressure is carried out, its pressure exceeds 666.6 Pa and not more than 13.33 kPa. In the case where the pressure is not more than 666. 6 Pa, a lactide is newly formed according to a chemical equilibrium present between polylactic acid and the lactide, and the incorporation of low molecular weight components in the resulting stereo complex polylactic acid becomes remarkable. Inversely, the case where the pressure exceeds 13.33 kPa is not efficient for the removal of low molecular weight components formed during mixing. The "low molecular weight components" as referred to herein mean the lactide formed in the course of mixing of polylactic acid and acetaldehyde, acetic acid and lactic acid as its decomposition products. Since all of these substances deteriorate the physical properties and long-term preservability of the final product, it is desired to remove them as far as possible.

Poly-L-lactic acid and poly-D-lactic acid after completion of the mixing are quantitatively extruded from the outlet of the shaftless cage type reactor and preferably through a gear pump. A discharge nozzle with a single hole or multiple holes or a die can be connected in a downstream of the gear pump. It is possible to fabricate a product in a strand or melt extruded film shape as a final form. In view of long-term preservability, it is preferable that the strand is cut into a chip state by a chip cutter. The film or chip is thermally treated to form a stereo crystal from which is then prepared stereo complex polylactic acid. The thermal treatment temperature is 100 °C or higher and lower than 220 °C, preferably 150 °C or higher and not higher than 210 °C, and more preferably 180 °C or higher and lower than 200 °C. When the thermal treatment temperature falls outside the foregoing numerical value range, there is caused a problem that a homo crystal grows without forming a stereo crystal, or a stereo crystal itself is molten.

It is preferable that the shaftless cage type reactor is provided with a vacuum pump for operation under reduced pressure, a pressure vessel for passing an inert gas, or a compressor. Furthermore, it is preferable that the shaftless cage type reactor is also provided with a collector for collecting the removed low molecular weight components. In the case where a vacuum pump is used, the collector is provided between the subject pump and the shaftless cage type reactor; and in the case where the inert gas is used, the collector is set up in a downstream on the basis of the shaftless cage type reactor.

As described above, the mixture of poly-L-lactic acid and poly-D-lactic acid as obtained according to the invention is thermally treated to form stereo complex polylactic acid which is less in a lowering in molecular weight and rich in a stereo crystal.

Incidentally, in the foregoing method, in place of the mixture of poly-L-lactic acid and poly-D-lactic acid as the throwing materials, it is possible to throw only polylactic acid to remove the lactide; or it is possible to throw poly-L-lactic acid and D-lactide or poly-D-lactic acid and L-lactide to achieve blocking, thereby manufacturing a polylactic L/D block copolymer.

Incidentally, in the foregoing manufacture of a block copolymer, it is preferred to add a deactivator after throwing L-lactide or D-lactide or after completion of the polymerization. For example, it is preferable that a flange for addition use is provided between the extruder and the shaftless cage type reactor or in the shaftless cage type reactor main body.

### EXAMPLES

The invention is more specifically described with reference to the following Examples, but it should not be construed that the invention is limited to these Examples. Also, the respective values in the Examples were determined in the following methods.

### (1) Measurement method of molecular weight:

A polymer was dissolved in chloroform to obtain a 0.5 W/W % solution. This solution was measured by using a GPC measurement analyzer manufactured by Shimadzu Corporation. A configuration of the measurement analyzer is as follows.
Detector: RID-6A
Pump: LC-9A
Column oven: CTO-6A
Column: Shim-pack GPC-801C, -804C, -806C and -8025C connected in series
Analysis condition:
   Solvent: Chloroform
   Flow rate: 1 mL/min
   Sample amount: 200 µL
   Column temperature: 40 °C

### (2) Measurement method of low molecular substances in polylactic acid:

50 mg of a polymer was dissolved in 5 mL of chloroform. This solution was measured by a chromatograph manufactured by Waters Corporation. A configuration of the measurement analyzer is as follows.
Detector: RI2414
Column oven: SMH
Column: Shodex GPC LF-804 (two connected in series)
Analysis condition:
   Solvent: Chloroform
   Flow rate: 1 mL/min
   Sample amount: 50 µL
   Column temperature: 40 °C

### (3) Measurement of melting point of crystal and melting enthalpy:

A melting point of crystal and a melting enthalpy were measured by using a differential scanning colorimeter (DSC2920) manufactured by TA Instruments, Inc. The measurement was carried out by using a measurement sample of from 5 to 10 mg at a temperature rising rate of 10 °C/min in the temperature rising range of from 20 °C to 250 °C. The melt enthalpy was calculated from an area of a region surrounded by a peak exhibiting the melting point of crystal and a base line.

### Example 1

48.75 parts per unit hour of L-lactide which had been sufficiently purged with nitrogen to remove residual oxygen and 1.25 parts per unit hour of D-lactide which had been similarly purged with nitrogen were continuously added in a vertical reactor; 0.05 parts per unit hour of lauryl alcohol and 0.004 parts per unit hour of tin octylate were further added; polymerization was performed at 180 °C for one hour; and polymerization was subsequently performed in a horizontal reactor at 190 °C for one hour, thereby manufacturing polylactic acid. The resulting polymer had a weight average molecular weight of 180,000. The polymer had a melting point of 158 °C and contained 3.5 % by weight of low molecular weight substances.

This polymer in a molten state was fed as it was from the inlet 2 of the reaction vessel of Fig. 1. The reaction product was controlled at 190 °C in the outlet by heating from a jacket having a heating medium sealed therein. Also, the reaction pressure was kept in a vacuum of 5 kPa by sucking a gas in the inside by a non-illustrated ejector. The number of revolution of each of the shafts 4 and 5 was kept at a fixed rotation as 1. 5 rpm by using a motor; and not only the end discs 8 and 9 were rotated, but also the helically provided stirring blades 10 connected and fixed to the end discs 8 and 9 and opening discs 13 were rotated. In the horizontal reactor used in this Example, the round bars 11 and 12 are not set up. The polymer fed into the reaction vessel was scraped up by the stirring blades, and the majority thereof was dropped while forming a stable liquid film from the stirring blades. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 10 minutes, polylactic acid having a weight average molecular weight of 200,000 and containing 400 ppm of low molecular weight compounds was obtained from the outlet 3.

### Example 2

50 parts of D-lactide was charged in a vertical reactor which had been purged with nitrogen, to which were then added 0.04 parts of stearyl alcohol and 0.01 parts of tin octylate; polymerization was performed at 200 °C for 2 hours; 0.006 parts of carboethoxymethanephosphonic acid was added; and after stirring for 5 minutes, the reaction product was cooled and solidified to obtain granular polylactic acid. This polylactic acid had a weight average molecular weight of 200, 000. The polymer had a melting point of 158 °C and contained 5.5 % by weight of low molecular weight substances.

100 parts of this granular polylactic acid was charged in a stirrer-equipped dissolution vessel provided with heating equipment and molten by heating at 180 °C under a nitrogen gas atmosphere. 2 parts per unit hour of this molten polylactic acid was continuously fed from the inlet 2 of the reaction vessel of Fig. 1. The reaction product was controlled at 180 °C in the outlet by heating from a jacket having a heating medium sealed therein. 0.0005 parts of a nitrogen gas was continuously fed from the injection port 14 of an inert gas and exhausted from 6. The reaction pressure was kept at atmospheric pressure. The number of revolution of each of the shafts 4 and 5 was kept at a fixed rotation as 5 rpm by using a motor; and not only the end discs 8 and 9 were rotated, but also the stirring blades 10 having a helical shape and connected and fixed to the end discs 8 and 9, the round bars 11 and 12 and opening discs 13 were rotated. In the horizontal reaction vessel used in this Example, the round bars 11 and 12 were set up. The polymer fed into the reaction vessel was scraped up by the stirring blades, and the majority thereof was dropped while forming a stable liquid film from the stirring blades and the round bars. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 10 minutes, polylactic acid having a weight average molecular weight of 180,000 and containing 600 ppm of low molecular weight compounds was obtained from the outlet 3.

### Example 3

50 parts of L-lactide was charged in a vertical reactor; the inside of the system was purged with nitrogen; thereafter, 0.04 parts of stearyl alcohol and 0.01 parts of tin octylate were added; polymerization was performed at 200 °C for 2 hours; and the reaction product was cooled and solidified to obtain granular poly-L-lactic acid. This polylactic acid had a weight average molecular weigh of 180,000. The polymer had a melting point of 158 °C and contained 3.1 % by weight of low molecular weight substances.

50 parts of D-lactide was charged in a vertical reactor; the inside of the system was purged with nitrogen; thereafter, 0.04 parts of stearyl alcohol and 0.01 parts of tin octylate were added; polymerization was performed at 200 °C for 2 hours; and the reaction product was cooled and solidified to obtain granular poly-D-lactic acid. This polylactic acid had a weight average molecular weigh of 180,000. The polymer had a melting point of 158 °C and contained 3.2 % by weight of low molecular weight substances.

100 parts per unit hour of the granular poly-L-lactic acid which had been dried and sufficiently purged with nitrogen and 10 parts per unit hour of the granular poly-D-lactic acid which had been dried and sufficiently purged with nitrogen were fed from individual feed ports of a single screw extruder having two feed ports, thereby obtaining a molten polymer of 230 °C in an outlet of the extruder.

This molten polymer was fed from the inlet 2 of the reaction vessel of Fig. 1. The reaction product was controlled at 240 °C in the outlet by heating from a jacket having a heating medium sealed therein. Also, the reaction pressure was kept in a vacuum of 25 kPa by sucking a gas in the inside by a non-illustrated ejector. The number of revolution of each of the shafts 4 and 5 was kept at a fixed rotation as 10 rpm by using a motor; and not only the end discs 8 and 9 were rotated, but also the stirring blades 10 having a helical shape and connected and fixed to the end discs 8 and 9 and opening discs 13 were rotated. In the horizontal reaction vessel used in this Example, the round bars 11 and 12 are not set up. The polymer fed into the reaction vessel was scraped up by the stirring blades, and the majority thereof was dropped while forming a stable liquid film from the stirring blades. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 40 minutes, polylactic acid having a weight average molecular weight of 180,000 and a melting point of 230 °C and containing 400 ppm of low molecular weight compounds was obtained from the outlet 3.

### Example 4

50 parts of L-lactide was charged in a vertical reactor; the inside of the system was purged with nitrogen; thereafter, 0.04 parts of stearyl alcohol and 0.01 parts of tin octylate were added; and polymerization was performed at 200 °C for 2 hours to obtain poly-L-lactic acid in a molten state. This polylactic acid had a weight average molecular weigh of 180,000. The polymer had a melting point of 158 °C and contained 3.1 % by weight of low molecular weight substances.

50 parts of D-lactide was charged in a vertical reactor; the inside of the system was purged with nitrogen; thereafter, 0.04 parts of stearyl alcohol and 0.01 parts of tin octylate were added; and polymerization was performed at 200 °C for 2 hours to obtain poly-L-lactic acid in a molten state. This polylactic acid had a weight average molecular weight of 180,000. The polymer had a melting point of 158 °C and contained 3.2 % by weight of low molecular weight substances.

10 parts per unit hour of the foregoing poly-L-lactic acid in a molten state and 10 parts per unit of the foregoing poly-D-lactic acid in a molten state were successively fed from the inlet 2 of the reaction vessel of Fig. 1. The reaction product was controlled at 240 °C in the outlet by heating from a jacket having a heating medium sealed therein. Also, the reaction pressure was kept in a vacuum of 20 kPa by sucking a gas in the inside by a non-illustrated ejector. The number of revolution of each of the shafts 4 and 5 was kept at a fixed rotation as 10 rpm by using a motor; and not only the end discs 8 and 9 were rotated, but also the stirring blades 10 having a helical shape and connected and fixed to the end discs 8 and 9 and opening discs 13 were rotated. In the horizontal reaction vessel used in this Example, the round bars 11 and 12 are not set up.

The polymer fed into the reaction vessel was scraped up by the stirring blades, and the majority thereof was dropped while forming a stable liquid film from the stirring blades. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 40 minutes, polylactic acid having a weight average molecular weight of 190,000 and a melting point of 230 °C and containing 400 ppm of low molecular weight compounds was obtained from the outlet 3.

### Example 5

50 parts of L-lactide was charged in a vertical reactor; the inside of the system was purged with nitrogen; thereafter, 0.06 parts of stearyl alcohol and 0.01 parts of tin octylate were added; polymerization was performed at 200 °C for 2 hours; and the reaction product was cooled and solidified to obtain granular polylactic acid. This polylactic acid had a weight average molecular weight of 150, 000. The polymer had a melting point of 156 °C and contained 2.3 % by weight of low molecular weight substances.

This granular polylactic acid was dried and purged with nitrogen and then fed in an amount of 10 parts per unit hour into a single screw extruder, thereby obtaining a molten polymer of 195 °C. Subsequently, the molten polymer was continuously fed into the inlet 2 of the reaction vessel of Fig. 1. The reaction product was controlled at 185 °C in the outlet by gradual heating from a jacket having a heating medium sealed therein. 0.06 parts of water vapor having a saturation temperature of 120 °C was continuously fed from the injection port 14 of an inert gas and exhausted from 6. The reaction pressure was kept at atmospheric pressure. The number of revolution of each of the shafts 4 and 5 was kept at a fixed rotation as 2 rpm by using a motor; and not only the end discs 8 and 9 were rotated, but also the stirring blades 10 having a helical shape and connected and fixed to the end discs 8 and 9, the round bars 11 and 12 and opening discs 13 were rotated. In the horizontal reaction vessel used in this Example, the round bars 11 and 12 were set up. The polymer fed into the reaction vessel was scraped up by the stirring blades, and the majority thereof was dropped while forming a stable liquid film from the stirring blades and the round bars. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 10 minutes, polylactic acid having a weight average molecular weight of 140, 000 and containing 250 ppm of low molecular weight compounds was obtained from the outlet 3.

### Example 6

50 parts of L-lactide was charged in a vertical reactor; the inside of the system was purged with nitrogen; thereafter, 0.04 parts of stearyl alcohol and 0.01 parts of tin octylate were added; polymerization was performed at 200 °C for 2 hours; and the reaction product was cooled and solidified to obtain granular poly-L-lactic acid. This polylactic acid had a weight average molecular weight of 180,000. The polymer had a melting point of 158 °C and contained 3.1 % by weight of low molecular weight substances.

50 parts of D-lactide was charged in a vertical reactor; the inside of the system was purged with nitrogen; thereafter, 0.04 parts of stearyl alcohol and 0.01 parts of tin octylate were added; polymerization was performed at 200 °C for 2 hours; and the reaction product was cooled and solidified to obtain granular poly-D-lactic acid. This polylactic acid had a weight average molecular weight of 180,000. The polymer had a melting point of 158 °C and contained 3.2 % by weight of low molecular weight substances.

10 parts per unit hour of the granular poly-L-lactic acid which had been dried and sufficiently purged with nitrogen was fed into a twin screw extruder to obtain molten poly-L-lactic acid of 190 °C in an outlet of the extruder. This outlet of the twin screw extruder was connected to the inlet 2 of the reaction vessel of Fig. 1. Furthermore, 10 parts per unit hour of the granular poly-D-lactic acid which had been dried and sufficiently purged with nitrogen was fed into a twin screw extruder to obtain molten poly-D-lactic acid of 190 °C in an outlet of the extruder. This outlet of the twin screw extruder was connected to the inlet 2 of the reaction vessel of Fig. 1.

The reaction vessel of Fig. 1 was controlled such that the temperature of the reaction product was 243 °C in the outlet by heating from a jacket having a heating medium sealed therein. Also, 0.02 parts per unit hour of water was continuously fed from 15, and exhaustion from 6 was continuously performed such that the pressure in the reaction vessel was 0.05 MPa. The number of revolution of each of the shafts 4 and 5 was kept at a fixed rotation as 2.4 rpm by using a motor; and not only the end discs 8 and 9 were rotated, but also the stirring blades 10 having a helical shape and connected and fixed to the end discs 8 and 9 and opening discs 13 were rotated.

Incidentally, in the horizontal reaction vessel used in this Example, the round bars 11 and 12 are not set up. The polymer fed into the reaction vessel was scraped up by the stirring blades, and the majority thereof was dropped while forming a stable liquid film from the stirring blades. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 40 minutes, polylactic acid having a weight average molecular weight of 180,000 and a melting point of 230 °C and containing 500 ppm of low molecular weight compounds was obtained from the outlet 3.

### Example 7

50 parts per unit hour of L-lactic acid and 0.025 parts per unit hour of tin octylate were continuously charged into a vertical reaction vessel and reacted at 180 °C, and the reaction was advanced while removing formed water. A mean residence time of this reaction vessel was one hour. Subsequently, the reaction product was transferred into a horizontal reaction vessel, the temperature was increased to 190 °C, and the reaction was advanced while removing formed water. A mean residence time of this reaction vessel was 0.6 hours. Furthermore, 0.015 parts per unit hour of carboethoxymethanephosphonic acid was continuously added just before entering the reaction vessel of Fig. 1.

Next, the mixture was continuously fed into the inlet 2 of the reaction vessel of Fig. 1. The reaction product was controlled at 190 °C in the outlet by gradual heating from a jacket having a heating medium sealed therein. The reaction pressure was kept in a vacuum of 0.5 kPa by sucking a gas in the inside by a non-illustrated ejector. The number of revolution of each of the shafts 4 and 5 was kept at a fixed rotation as 2 rpm by using a motor; and not only the end discs 8 and 9 were rotated, but also the stirring blades 10 having a helical shape and connected and fixed to the end discs 8 and 9, the round bars 11 and 12 and opening discs 13 were rotated. In the horizontal reaction vessel used in this Example, the round bars 11 and 12 were set up. The polymer fed into the reaction vessel was scraped up by the stirring blades, and the majority thereof was dropped while forming a stable liquid film from the stirring blades and the round bars. Also, a part thereof was rotated together with the stirring blades, thereby always renewing the inner surface of the outer shell by a new polymer. By this stirring, separation of the low molecular weight compounds is promoted. The polymer flowed into a next chamber by overflowing from the central opening of the opening disc 13 configuring a partition, and after elapsing the residence time of about 10 minutes, polylactic acid having a weight average molecular weight of 110, 000 and containing 320 ppm of low molecular weight compounds was obtained from the outlet 3.

### Example 8

The temperature of the shaftless cage type reactor as illustrated in Fig. 1 (however, the stirring blade does not have a helical shape) was increased to 230 °C, and a flange-equipped 50A single tube extended from a twin screw extruder (PCM-30) manufactured by Ikegai, Ltd. was connected to an inlet thereof. Poly-L-lactic acid having Mw of 128,100 and poly-D-lactic acid having Mw of 114,340 were charged in a weight ratio of 1/1 in a hopper of the twin screw extruder, molten at 230 °C and fed at a rate of 15 kg/hr. For the purpose of filling polylactic acid in the reactor, the reactor was allowed to stand at the foregoing feed rate for 30 minutes. Thereafter, the inside of the reactor was evacuated to 1 kPa, and mixing was started while circling the stirring blade at 5.5 rpm. A gear pump and a discharge port having a single hole having a diameter of 3 mm were connected to the outlet of the reactor, and the polylactic acid was extruded at a rate of 15 kg/hr. The discharged polylactic acid was dipped in a water-cooling bath to form a strand in a glass-like state, which was then cut in a columnar chip having a radius of 3 mm and a length of 4 mm by using a chip cutter. The resulting polylactic acid had a weight average molecular weight (Mw) of 114,000 and a residual amount of lactide of 3,300 ppm. Incidentally, in this Example, Shodex's GPC-11 was used for the measurement of the weight average molecular weight.

### Example 9

Mixing and chipping were carried out in the same manner as in Example 8, except for changing the inner temperature of the shaftless cage type reactor to 210 °C. The resulting polylactic acid had a weight average molecular weight (Mw) of 121,500 and a residual amount of lactide of 4,200 ppm. Incidentally, in this Example, Shodex's GPC-11 was used for the measurement of the weight average molecular weight.

### Example 11

The chip obtained in Example 4 was allowed to stand in a hot air circulating dryer of 200 °C and thermally treated for one hour to prepare stereo complex polylactic acid. The resulting stereo complex polylactic acid had a melting point of crystal of 222 °C and a melting enthalpy of 51.6 J/g.

### Example 12

The chip obtained in Example 8 was allowed to stand in a hot air circulating dryer of 200 °C and thermally treated for one hour to prepare stereo complex polylactic acid. The resulting stereo complex polylactic acid had a melting point of crystal of 214.6 °C and a melting enthalpy of 45.2 J/g.

### Example 13

The chip obtained in Example 9 was allowed to stand in a hot air circulating dryer of 200 °C and thermally treated for one hour to prepare stereo complex polylactic acid. The resulting stereo complex polylactic acid had two melting peaks of a peak having a melting point of crystal of 215.5 °C and a melting enthalpy of 42.1 J/g and a peak having a melting point of crystal of 175.1 °C and a melting enthalpy of 4.3 J/g. The melting peak of 195 °C or higher accounted for 90 % or more.

### Example 14

50 parts of L-lactide was charged in a vertical reactor; the inside of the system was purged with nitrogen; thereafter, 0.04 parts of stearyl alcohol and 0.01 parts of tin octylate were added; and polymerization was performed at 200 °C for 2 hours. Poly-L-lactic acid in a molten state was drawn in a strand form from a discharge port of the reactor and cut in a columnar chip having a radius of 3 mm and a length of 4 mm by using a chip cutter while cooling in a water-cooling bath. This poly-L-lactic acid had a weight average molecular weight of 110,000 and a melting point of 174 °C and contained 3.7 % by weight of low molecular weight substances.

This poly-L-lactic acid chip was filled in the hopper of the apparatus system as described in Example 8 and fed at 230 °C at a rate of 15 kg/hr. 15 kg of the molten poly-L-lactic acid was filled over one hour while evacuating the shaftless cage type reactor in the apparatus system to 1 kPa. The reaction product was controlled at 240 °C in the outlet by heating from a jacket having a heating medium sealed therein. Also, the reaction pressure was kept in a vacuum of 1 kPa by sucking a gas in the inside by a non-illustrated ejector. The number of revolution of each of the shafts 4 and 5 was kept at a fixed rotation as 10 rpm by using a motor; and not only the end discs 8 and 9 were rotated, but also the stirring blades 10 connected and fixed to the end discs 8 and 9 and opening discs 13 were rotated. Incidentally, the stirring blade of the horizontal reaction vessel used in this Example does not have a helical shape.

The reduced pressure state of 1 kP was kept; the removal of low molecular compounds was continued for 30 minutes; and thereafter, nitrogen was introduced into the apparatus, thereby returning to the atmospheric pressure. Next, the 50A single tube connected to the twin screw extrude was eliminated; 20 parts of D-lactide and 0.004 parts of tin octylate were added from its opening; and polymerization was performed under 1 atmosphere at 240 °C for 2 hours. Finally, the removal of low molecular weight compounds was performed over one hour while evacuating the inside of the apparatus to 1 kPa, thereby obtaining stereo block polylactic acid in a molten state. This was drawn in a strand form from a discharge port of the horizontal reactor and cut in a columnar chip having a radius of 3 mm and a length of 4 mm by using a chip cutter while cooling in a water-cooling bath. This polylactic acid had a weight average molecular weight of 165,000. The polymer had a melting point of crystal of 211 °C and a melting enthalpy of 63.4 J/g and contained 660 ppm of low molecular weight substances.

### Example 15

Polymerization and chipping were carried out under the same condition as in Example 14, except for changing the polylactic acid to be polymerized in the vertical reactor to poly-D-lactic acid and changing the lactide to be subsequently thrown in the horizontal reactor to L-lactide. This polylactic acid had a weight average molecular weight of 181,000. The polymer had a melting point of crystal of 213 °C and a melting enthalpy of 57.9 J/g and contained 720 ppm of low molecular weight substances.

## Claims

1. A manufacturing apparatus of polylactic acid having at least an inlet and an outlet of a substance to be reacted and an exhaust port and provided with the following elements (A) to (E):
(A) a cylindrical reactor having an inlet and an outlet thereof in the vicinity of both ends thereof, respectively;
(B) rotatory end discs provided opposing to each other in the both ends in the inside of the reactor;
(C) a disc arranged between the end discs and having an opening in a central part thereof;
(D) a helically provided stirring blade installed between the end disc and the opening disc and between the opening discs and provided in close contact with or in the vicinity of an internal circumferential wall surface of the reactor along a longitudinal direction of a shaftless cage type reactor; and
(E) a free surface area forming member provided on an extension of the stirring blade towards the inside of the reactor.

2. The manufacturing apparatus of polylactic acid according to claim 1, further having an inlet of an inert gas.

3. A manufacturing method of polylactic acid by using the apparatus according to claim 1, throwing polylactic acid from an inlet of a substance to be reacted and evacuating from an exhaust port.

4. The manufacturing method of polylactic acid according to claim 3, wherein a liquid which is vaporized in the reactor is further added from the inlet of a substance to be reacted and exhausted from the exhaust port.

5. The manufacturing method of polylactic acid according to claim 3, wherein steam is further added from the inlet of a substance to be reacted and exhausted from the exhaust port.

6. A manufacturing method of polylactic acid by using the apparatus according to claim 2, throwing polylactic acid from an inlet of a substance to be reacted, injecting an inert gas from the inlet of an inter gas and evacuating from an exhaust port.

7. A manufacturing method of polylactic acid by using a shaftless cage type reactor provided with the following elements (a) to (e):
(a) a cylindrical reactor having an inlet and an outlet thereof in the vicinity of both ends thereof, respectively;
(b) rotatory end discs provided opposing to each other in the both ends in the inside of the reactor;
(c) a disc arranged between the end discs and having an opening in a central part thereof;
(d) a stirring blade installed between the end disc and the opening disc and between the opening discs and provided in close contact with or in the vicinity of an internal circumferential wall surface of the reactor along a longitudinal direction of a shaftless cage type reactor; and
(e) a free surface area forming member provided on an extension of the stirring blade towards the inside of the reactor.

8. The manufacturing method of polylactic acid according to claim 7, wherein the shaftless cage type reactor is used for stereo complexation of poly-L-lactic acid and poly-D-lactic acid.

9. The manufacturing method of polylactic acid according to claim 7, wherein the shaftless cage type reactor is used for eliminating a lactide from polylactic acid.

10. The manufacturing method of polylactic acid according to claim 7, wherein the shaftless cage type reactor is used in a blocking process for mixing poly-L-lactic acid and D-lactide or poly-D-lactic acid and L-lactide.
